# EUROPEAN PATENT APPLICATION

(11) **EP 4 141 596 A1**
(43) Date of publication of application: **01.03.2023**
(21) Application number: 21193835.2
(22) Date of filing: 30.08.2021
(51) Int. Cl.: G05B 19/418, G06N 20/00

(54) **METHOD OF TRANSMITTING PROCESS DATA TO A MACHINE LEARNING APPLICATION**

(71) Applicant: Siemens Aktiengesellschaft, 80333 München (DE)
(72) Inventor: Milovanovic, Igor, 90571 Schwaig b. Nürnberg (DE); Bender, Philipp, 76761 Rülzheim (DE); Ochsenfeld, Henning, 90491 Nürnberg (DE)

(57) **Abstract**

Accordingly, the current disclosure describes a method of transmitting process data to a machine learning application for retraining a machine learning model. The method comprises receiving process data from industrial devices for caching the received process data in a local cache, monitoring one or more parameters associated with a trained machine learning model instance, determining at least one anomaly in the process data based on a subset of datapoints in the process data, and transmitting the subset of datapoints in the process data to the machine learning application based on the determined at least one anomaly and the monitored one or more parameters. Accordingly, the current disclosure describes a method which is able to recognize if the currently stored process data acquired from the industrial processes can contribute towards improvement of the model quality ahead of data upload.

## Description

### Background

The current disclosure relates to machine learning applications and more particularly, relates to training of machine learning applications deployed in industrial environments. Conv2entionally, training of machine learning application is performed using a common pattern (closed loop ML/AI) which comprises data acquisition from field devices and other data sources to a cloud platform on which the machine learning training application is hosted, and training of the machine learning model on the cloud platform. Subsequent to the training, an instance of the trained machine learning model is downloaded and deployed in the industrial environment. This pattern is often repeated over time ("model retraining") to maintain or improve the quality of the trained model.

### Description

The current disclosure relates to machine learning applications and particularly, to training of machine learning models and applications deployed in industrial environments. For training of machine learning, a huge volume of process data is transmitted from a plurality of industrial data sources to a cloud platform on which the machine learning training application is deployed. Since this transmission is carried out continuously, and accordingly, this transmission of high volumes of data may incur substantial costs in terms of communication and storage costs. This substantial costs in terms of cloud consumption, data transmission and storage, may probably justified if it results in substantial improvements can improve the quality of the trained ML model by providing additional information about the process.

However, this is often not the case since subsequent to the training of the model, most process data do not provide any significant or meaning adjustments to the coefficients of the trained model. For example, if the machine learning model is tasked with a quality control of the industrial process, and in the situation that the trained model instance is performing well and the industrial process is also performing similar to the process data used for training, then gathering large amounts of raw data, which are representing the process without any changes, anomalies or quality issues will not help improve the quality of the model, while incurring significant costs in terms of cloud consumption and data transmission. Accordingly, there is a need for a method and a device which can address the issues mentioned above.

Accordingly, the current disclosure describes a method of transmitting process data to a machine learning application for retraining a machine learning model. The method comprises receiving process data from one or more industrial devices for caching the received process data in a local cache, monitoring one or more parameters associated with a trained machine learning model instance, determining at least one anomaly in the process data based on a subset of datapoints in the process data, and transmitting the subset of datapoints in the process data to the machine learning application based on the determined at least one anomaly and the monitored one or more parameters. The process data include a plurality of data points and is associated with at least one process in an industrial facility. The trained machine learning model instance is deployed on a device in the industrial facility. Accordingly, the current disclosure describes a method which is able to recognize if the currently stored process data acquired from the industrial processes can contribute towards improvement of the model quality ahead of data upload. Such intelligent method of data transmission can help reduce the overall total cost of such a system by eliminating the transmission or upload of process data which does not contribute to the quality improvement of the machine learning model.

In an example the machine learning application is hosted on a cloud platform. The machine learning application is hosted on a remote server outside of the industrial facility. In an example, the subset of datapoints is transmitted to the machine learning application when the monitored one or more parameters is outside of a predefined threshold range.

In an application, the method further comprises applying a statistical transformation to the process data prior to caching the process data in the local cache. Accordingly, by applying the statistical transformation, the amount of process data stored in the local cache may be reduced. In an example, the method further comprises detecting a new device identifier associated with a first industrial device in the process data based on a list of known identifiers and generating an instance for the first industrial device in the cloud platform. Accordingly, the current disclosure allows for automatic detection of a new industrial device and creation of device instance for storage of process data associated with the new industrial device without minimal to no manual intervention.

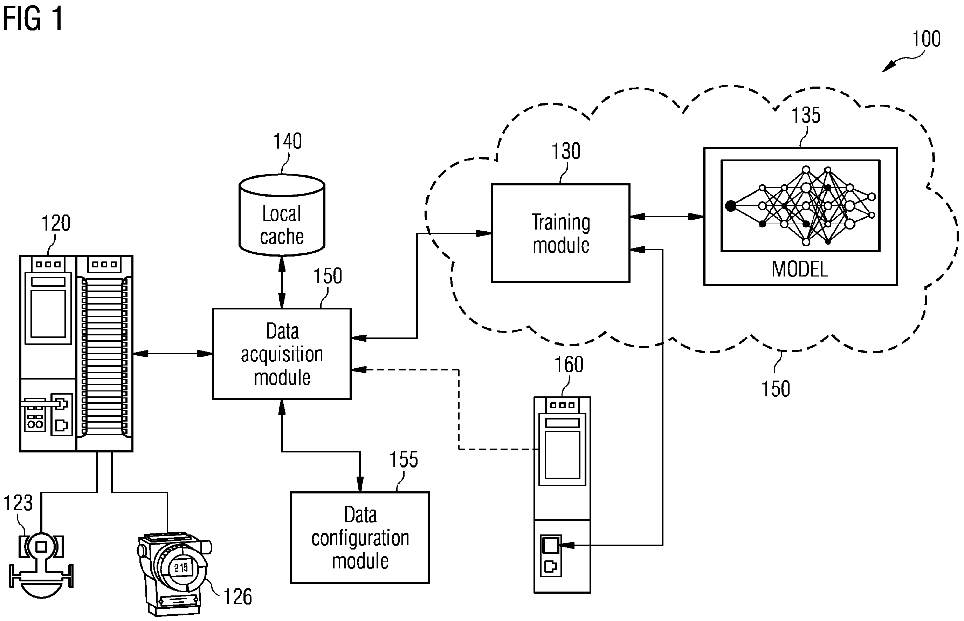

In another aspect, the current disclosure describes a device for transmitting process data to a machine learning application for retraining a machine learning model. The device comprises one or more processors connected to a memory module and are configured to receive process data from one or more industrial devices for caching the received process data in a local cache wherein the process data include a plurality of data points and is associated with at least one process in an industrial facility, monitor one or more parameters associated with a trained machine learning model instance, wherein the trained machine learning model instance is deployed on a device in the industrial facility, determine at least one anomaly in the process data, wherein the anomaly is determined based on a subset of datapoints in the process data, and transmit the subset of datapoints in the process data to the machine learning application based on the determined at least one anomaly and the monitored one or more parameters. In another aspect, the current disclosure describes a non-transitory storage medium for transmitting process data to a machine learning application for retraining a machine learning model, the non-transitory storage medium device comprising a plurality of instructions, which when executed on one or more processors cause the one or more processors to receive process data from one or more industrial devices for caching the received process data in a local cache wherein the process data include a plurality of data points and is associated with at least one process in an industrial facility, monitor one or more parameters associated with a trained machine learning model instance, wherein the trained machine learning model instance is deployed on a device in the industrial facility, determine at least one anomaly in the process data, wherein the anomaly is determined based on a subset of datapoints in the process data and transmit the subset of datapoints in the process data to the machine learning application based on the determined at least one anomaly and the monitored one or more parameters. Advantages of the above-mentioned method apply to the above-mentioned device and the non-transitory storage medium. These aspects are further described in relation to figures 1-3.
Figure 1 illustrates an industrial facility connected to a cloud platform for receiving a trained machine learning instance;
Figure 2 illustrates a method for transmitting process data to a machine learning application for retraining a machine learning model; and
Figure 3 illustrates a device for transmitting process data to a machine learning application for retraining a machine learning model.

Figure 1 illustrates an industrial facility 100. Industrial facility herein refers to any environment where one or more industrial processes such as manufacturing, refining, smelting, or assembly of equipment may take place. This includes process plants, oil refineries, automobile factories, power plants, storehouses, etc. The plurality of industrial process and operations may be carried out in production cells using a plurality of devices such as control devices, field devices, mobile devices, etc., present with the corresponding production cell. The control devices include process controllers, programmable logic controllers, supervisory controllers, automated guided vehicles, robots, operator devices, etc. One or more control devices (shown in the figure as controller 120) are connected to a plurality of field devices (shown in figure as field devices 123 and 126) such as actuators and sensor devices for monitoring and controlling various industrial processes in the industrial facility. These field devices can include flowmeters, value actuators, temperature sensors, pressure sensors, etc. The industrial facility may include an operator station for displaying the status of the industrial facility to an operator and for allowing the operator to define KPIs for the control of the industrial processes in the facility. Additionally, the industrial facility includes one or more edge devices (shown in the figure as edge device 160). The edge device 160 includes an instance of a trained machine learning model for performing one or more functions in the industrial facility 100. For example, the deployed machine learning instance on the edge device 160 is used to perform quality assessment of work in progress items manufactured in the industrial facility. The edge device 160 is configured to receive image data associated with one or more work in progress items, from one or more image sensors and based on the image data, the edge device 160 using the trained machine learning instance, the edge device 160 evaluates a condition associated with each work in progress item.

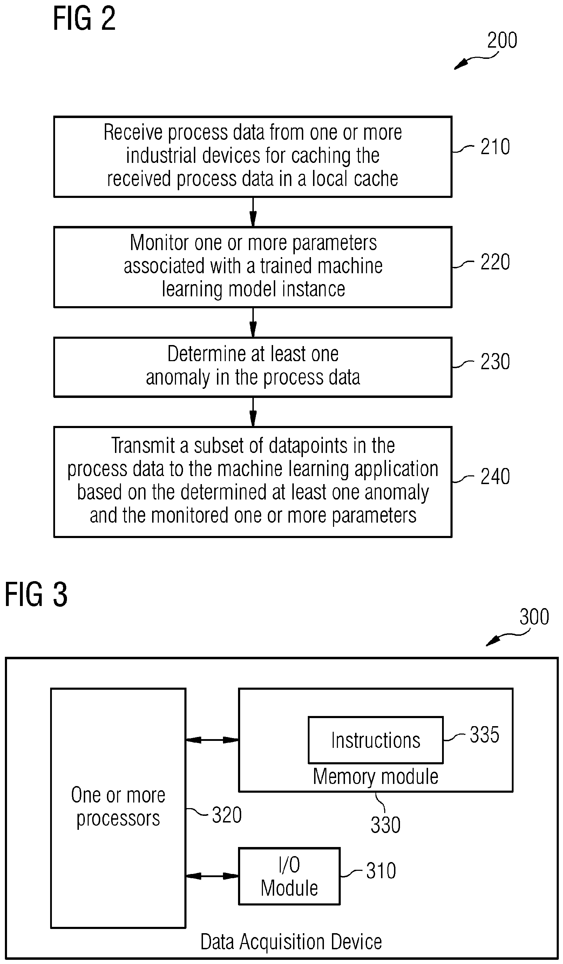

For receiving the trained machine learning instance, the edge device 160 is connected to a training application module 130 (also referred to as training module or training application 130). The training application module 130 is hosted on a cloud platform 150 along with a machine learning model 135. The training application 130 is configured to receive process data via a data acquisition module 150 for training the machine learning model 135 and coordinates with the edge device 160 for deployment of the instance of trained machine learning model on the edge device 160. Accordingly, the data acquisition module 150 is configured to obtain or fetch process data from the control devices, field devices and other such industrial devices including historians, edge servers, etc., (collectively referred to as industrial devices or industrial data sources) and transmit the process data and store the process data in a local cache 140. Based on certain configured criteria, the data acquisition module 150 transmits the process data to the training application module 150. This is further explained in reference to figure 2.

Figure 2 illustrates a method 200 for transmitting process data to a machine learning application 130 for retraining a machine learning model 135. In an example, the method 200 is implemented by the data acquisition module 150. At step 210, the data acquisition module 150 receives process data from one or more industrial devices (120, 123, 126; also referred to as industrial data sources). The process data include a plurality of data points and is associated with at least one process in an industrial facility. For example, the process data includes time series data indicative of a value of process parameter associated with the at least one process. For example, the process data includes time series data associated with a temperature of a boiler in a paper manufacturing process. In an example, the data acquisition module 150 includes one or more protocols translators using which the process data is converted from various industrial formats to a data exchange protocol such as JSON or XML, etc.

Subsequent to the receipt of the process data, the data acquisition module 150 stores/caches the process data in a local cache 140. In order to reduce data transmission to cloud 150, the data acquisition module 150 stores the process data in the local cache 140 and the process data is transmitted conditionally. In an example, the data acquisition module 150 is configured to apply one or more statistical transformations to compress or reduce the process data prior to storing the process data on the local cache 140. The one or more statistical transformations may include smoothening, down-sampling, building of averages, dropping of irrelevant features etc.

Then, at step 220, the data acquisition module 150 monitors one or more parameters associated with a trained machine learning model instance deployed on the edge device 160 in the industrial facility. The one or more parameters are indicative of an effectiveness of the trained machine learning model instance and may include confidence score associated with the trained machine learning model instance, error rate associated with the trained machine learning model instance, etc. In an example, the data acquisition module 150 utilizes one or more predefined thresholds to evaluate if the one or more parameters indicate if the process data to be classified are statistically supported by the training set or not (e.g. Mahalonobis distance between the process data and training set). This data is used to determine if the process data needs to be transmitted for re-training of the model.

Then, at step 230, the data acquisition module 150 determines at least one anomaly in the process data. The at least one anomaly is determined based on a subset of datapoints in the process data. The data acquisition module 150 includes one or more anomaly detection techniques for detecting the presence of an at least one anomaly in the process data. For example, when the process data is time series data, the anomaly detection algorithms include statistical profiling, clustering, etc.

The data acquisition module will apply one or more anomaly detection algorithms to the process data (e.g., statistical tests on input/output streams (e.g., chi-squared test), K-nearest neighbors (KNN), Bayesian networks, decision trees, k-means, c-means...) and the machine learning result data and will decide according to the configuration if the data transmission is necessary. For example, the data acquisition module can decide if the distance of the tracked process data from the mean exceeds a certain threshold that the data transmission is necessary. Similarly, data acquisition module can decide to transfer the data if the distribution of machine learning results over time significantly differs from the expected distribution. (For example, in a fictive quality management use case where the expected good/bad ratio of monitored operations is 10 bad operations on every 1000 operations, the data acquisition module will start the data transmission if the number of bad operations is within the configured limits but is not equally distributed over time).

The data acquisition module 150 is configured to segment the process data into a plurality of subsets based on a predetermined window or length associated with the one or more anomaly detection techniques. Accordingly, the process data includes a plurality of subsets of data points, each subset of a predefined length.

Finally, at step 240, the data acquisition module 150 transmits the subset of datapoints associated with the at least one anomaly in the process data to the machine learning application 130 based on the determined at least one anomaly and the monitored one or more parameters. The data acquisition module 150 determines a need for data transmission based on the trained machine learning instance and the anomalies detected. For example, if the accuracy (i.e., confidence score) of the trained machine learning instance has fallen below a particular threshold, the data acquisition module 150 determines that there is a need for data transmission. Then, the data acquisition module 150 selects the subset of data points based on the detected anomaly and then transmits the subset of data points to the training application 130. Accordingly, the data transmission to the training application 130 is made conditional to the condition of the trained machine learning instance deployed in the industrial facility and the anomalies detected in the process data. Accordingly, data transmission does not take place when the trained machine learning instance is performing adequately or when the process data does not have any anomalies.

In an example, the method 200 further comprises detecting a new device identifier associated with a first industrial device in the process data based on a list of known identifiers and generating an instance for the first industrial device in the cloud platform 150. Accordingly, the data acquisition module 150 is configured to check the process data to see if the process data includes data from a new industrial device (also referred to as first industrial device) based on the device identifier. If the device identifier is not in a list of know device identifiers, the data acquisition 150 determines that the first industrial device associated with the device identifier is a new industrial device. Based on the detected device identifier, the data acquisition module 150 is configured to communicate with a cloud management module (not shown in figure) to create an instance for the first industrial device for storing the process data associated with the first industrial device. Accordingly, the data acquisition module is configured to automatically detect data from a new device and create an instance to store the data without manual intervention.

It is to be noted that while the above method 200 is explained in relation to the data acquisition module, the above method may be realized in another device or a plurality of devices. For example, the method 200 may be implemented in an edge server. Accordingly, the present disclosure can take a form of a computer program product comprising program modules accessible from computer-usable or computer-readable medium storing program code for use by or in connection with one or more computers, processing units, or instruction execution system.

Accordingly, the current disclosure describes a device 300 as shown in figure 3. The device 300 transmits process data to a machine learning application 130 for retraining a machine learning model 135. The device 300 comprises an I/O module 310 for transmitting and receiving data with other industrial devices, one or more processors 320 connected to a memory module 330 (also referred to as non-transitory storage medium 330). The memory module 330 or the non-transitory storage medium 330 includes a plurality of instructions 335 which when executed by the one or more processors 320, cause the one or more processors 320 to receive process data from one or more industrial devices (120, 123, 126) for caching the received process data in a local cache 140 wherein the process data include a plurality of data points and is associated with at least one process in an industrial facility; monitor one or more parameters associated with a trained machine learning model instance, wherein the trained machine learning model instance is deployed on a device 160 in the industrial facility; determine at least one anomaly in the process data, wherein the anomaly is determined based on a subset of datapoints in the process data; and transmit the subset of datapoints in the process data to the machine learning application 130 based on the determined at least one anomaly and the monitored one or more parameters.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of transmitting process data to a machine learning application (130) for retraining a machine learning model (135), the method (200) comprising:
a. receiving (210) process data from one or more industrial devices (120, 123, 126) for caching the received process data in a local cache (140), wherein the process data include a plurality of data points and is associated with at least one process in an industrial facility;
b. monitoring (220) one or more parameters associated with a trained machine learning model instance, wherein the trained machine learning model instance is deployed on a device (160) in the industrial facility;
c. determining (230) at least one anomaly in the process data, wherein the anomaly is determined based on a subset of datapoints in the process data; and
d. transmitting (240) the subset of datapoints in the process data to the machine learning application (130) based on the determined at least one anomaly and the monitored one or more parameters.

2. The method (200) as claimed in claim 1, wherein the machine learning application (130) is hosted on a cloud platform (150).

3. The method (200) as claimed in claim 1, wherein the process data includes time series data associated with one or more process parameters of the at least one process in the industrial facility.

4. The method (200) as claimed in claim 1, wherein the one or more parameters of the trained machine learning model instance are indicative of an effectiveness of the trained machine learning model instance.

5. The method (200) as claimed in claim 1, wherein the method further comprises segmenting the process data into a plurality of subsets of data points, wherein each subset of the data points is of a predefined length.

6. The method (200) as claimed in claim 1, wherein the subset of datapoints is transmitted to the machine learning application (130) when the monitored one or more parameters is outside of a predefined threshold range.

7. The method (200) as claimed in claim 1, wherein the method (200) further comprises applying a statistical transformation to the process data prior to caching the process data in the local cache (140).

8. The method (200) as claimed in claim 1, wherein the method (200) further comprises detecting a new device identifier associated with a first industrial device in the process data based on a list of known identifiers and generating an instance for the first industrial device in the cloud platform (150).

9. A device (300) for transmitting process data to a machine learning application (130) for retraining a machine learning model (135), the device (300) comprising:
a. One or more processors (320) connected to a memory module (330), the one or more processors (320) configured to:
i. receive process data from one or more industrial devices (120, 123, 126) for caching the received process data in a local cache (140) wherein the process data include a plurality of data points and is associated with at least one process in an industrial facility;
ii. monitor one or more parameters associated with a trained machine learning model instance, wherein the trained machine learning model instance is deployed on a device (160) in the industrial facility;
iii. determine at least one anomaly in the process data, wherein the anomaly is determined based on a subset of datapoints in the process data; and
iv. transmit the subset of datapoints in the process data to the machine learning application (130) based on the determined at least one anomaly and the monitored one or more parameters.

10. A non-transitory storage medium (330) for transmitting process data to a machine learning application (130) for retraining a machine learning model (135), the non-transitory storage medium device (330) comprising a plurality of instructions (335), which when executed on one or more processors (320) cause the one or more processors (320) to:
a. receive process data from one or more industrial devices (120, 123, 126) for caching the received process data in a local cache (140) wherein the process data include a plurality of data points and is associated with at least one process in an industrial facility;
b. monitor one or more parameters associated with a trained machine learning model instance, wherein the trained machine learning model instance is deployed on a device (160) in the industrial facility;
c. determine at least one anomaly in the process data, wherein the anomaly is determined based on a subset of datapoints in the process data; and
d. transmit the subset of datapoints in the process data to the machine learning application (130) based on the determined at least one anomaly and the monitored one or more parameters.
